(19) Europäisches Patentamt
European Patent Office
Office européen des brevets

(11) **EP 1 157 511 B1**

(12) **EUROPÄISCHE PATENTSCHRIFT**

(45) Veröffentlichungstag und Bekanntmachung des Hinweises auf die Patenterteilung:
**11.07.2007   Patentblatt 2007/28**

(51) Int Cl.:
***H04L 25/03*** *(2006.01)*       ***H04L 27/26*** *(2006.01)*

(21) Anmeldenummer: **00916788.3**

(22) Anmeldetag: **01.03.2000**

(86) Internationale Anmeldenummer:
**PCT/DE2000/000613**

(87) Internationale Veröffentlichungsnummer:
**WO 2000/052892 (08.09.2000 Gazette 2000/36)**

(54) **VERFAHREN ZUR KOMPENSATION VON STÖRUNGEN BEI EINEM MIT DISKRETER MULTITON-MODULATION ERZEUGTEN SIGNAL UND SCHALTUNGSANORDNUNG ZUR DURCHFÜHRUNG DES VERFAHRENS**

METHOD OF NOISE CANCELLATION IN A SIGNAL GENERATED BY DISCRETE MULTI-TONE MODULATION AND CIRCUIT FOR CARRYING OUT SAID METHOD

PROCEDE POUR LA COMPENSATION DE PERTURBATIONS POUR UN SIGNAL GENERE PAR MODULATION DE MULTITONALITE DISCRETE ET CIRCUIT POUR L'EXECUTION DE CE PROCEDE

(84) Benannte Vertragsstaaten:
**DE**

(30) Priorität: **01.03.1999   DE 19908806**

(43) Veröffentlichungstag der Anmeldung:
**28.11.2001   Patentblatt 2001/48**

(73) Patentinhaber: **Infineon Technologies AG
81669 München (DE)**

(72) Erfinder:
• **SCHENK, Heinrich
  D-81476 München (DE)**
• **STRÄUSSNIGG, Dietmar
  A-9500 Villach (AT)**

• **SCHNEIDER, Stefan
  A-8010 Graz (AT)**

(74) Vertreter: **Reinhard - Skuhra - Weise & Partner
Postfach 44 01 51
80750 München (DE)**

(56) Entgegenhaltungen:
**EP-A- 0 768 778       DE-A- 19 901 465
US-A- 5 521 908**

• **AL-DHAHIR N ET AL: "OPTIMUM FINITE-LENGTH EQUALIZATION FOR MULTICARRIER TRANSCEIVERS" IEEE TRANSACTIONS ON COMMUNICATIONS,US,IEEE INC. NEW YORK, Bd. 44, Nr. 1, 1996, Seiten 56-64, XP000549644 ISSN: 0090-6778 in der Anmeldung erwähnt**

## Beschreibung

Die Erfindung betrifft ein Verfahren zur Kompensation von Störungen bei einem mit Diskreter Multiton-Modulation erzeugten Signal nach dem Oberbegriff von Patentanspruch 1 und eine Schaltungsanordnung zur Durchführung des Verfahrens nach dem Oberbegriff von Patentanspruch 4.

Die diskrete Multiton-Modulation (DMT) - auch Mehrträgermodulation - ist ein Modulationsverfahren, das sich insbesondere zur Übertragung von Daten über linear verzerrende Kanäle eignet. Gegenüber einem sogenannten Einträgerverfahren - beispielsweise die Amplitudenmodulation - , das nur eine Trägerfrequenz aufweist, werden bei der diskreten Multiton-Modulation eine Vielzahl von Trägerfrequenzen benutzt. Jede einzelne Trägerfrequenz wird in der Amplitude und Phase nach der Quadraturamplituden-Modulation (QAM) moduliert. Man erhält somit eine Vielzahl von QAM-modulierten Signalen. Pro Trägerfrequenz kann dabei eine bestimmte Anzahl an Bits übertragen werden. Die diskrete Multiton-Modulation wird beispielsweise für den digitalen Rundfunk DAB (Digital Audio Broadcast) unter der Bezeichnung OFDM (Orthogonal Frequency Division Multiplex) und zur Übertragung von Daten über Telefonleitungen unter der Bezeichnung ADSL (Asymmetric Digital Subscriber Line) eingesetzt.

Bei ADSL ist der physische Übertragungskanal eine Zweidrahtleitung (Kupferdoppelader) des Telefonnetzes. Allerdings weist ein solcher Übertragungskanal eine lange Einschwingzeit auf. Mit Diskreter Multion-Modulation erzeugte Signale enthalten typischerweise sehr kurze Impulse mit einer hohen Amplitude, die bei diesem Übertragungskanal langsam ausklingende Impulsantworten bewirken. Ist eine Impulsantwort noch nicht vollständig abgeklungen, wenn ein neuer Impuls beim Empfänger eintrifft, so treten Störungen im Empfänger auf. Zur Kompensation solcher Störungen enthalten DMT-Empfänger beispielsweise Zeitbereichsentzerrer, die die Impulsantwort des Übertragungskanals verkürzen und Störungen aufgrund einer Überlagerung einer noch nicht abgeklungenen Impulsantwort eines Impulses und einer Impulsantwort eines nachfolgenden Impulses vermeiden sollen.

Der Zeitbereichsentzerrer (TDEQ = Time domain Equalizer) kann beispielsweise als digitales Transversalfilter, dessen Koeffizienten einstellbar sind, ausgeführt sein. Der Entwurf solcher Zeitbereichsentzerrer ist in Al-Dhahir, N., Cioffi, J.M., "Optimum Finite-Length Equalization for Multicarrier Transceivers", IEEE Trans.on Comm., Vol.44, No.1, Jan.1996 beschrieben.

Die Druckschrift US-A-5 521 908 beschreibt ein Verfahren zur Bestimmung eines Satzes von Zeitbereichsparametern eines SIRF-Filters. Dazu werden die ursprünglichen Kanal- und Echo-Impulsantworten näherungsweise bestimmt und auf den kombinierten, näherungsweise berechneten Kanal- und Echo-Impulsantworten basierenden SIRF-Koeffizienten aufgezeichnet.

Ein SSNR-Verhältnis wird für die SIRF-Koeffizienten berechnet, wobei die einzelnen Schritte für eine Ermittlung der Koeffizienten mit dem besten SSNR-Verhältnis wiederholt werden.

Die Druckschrift EP 0 768 778 A1 umfasst ein Verfahren und eine entsprechende Vorrichtung zum Übertragen von Impulsantworten. Es wird ein Parametersatz für einen Entzerrer berechnet, der eine Impulsantwort derart entzerrt, dass die entzerrte Impulsantwort näherungsweise einer Soll-Impulsantwort einer vorbestimmten Länge entspricht. Dazu wird eine Fehlerfunktion über Eigenwert- und Eigenvektorberechnung einer kanalabhängigen Matrix minimiert. Die kanalabhängige Matrix besteht aus einen Signal, einen gestörtem Signal, einer Soll-Impulsantwortlänge und einer Soll-Impulsantwortverzögerung. Die Fehlerfunktion weist einen ersten Anteil, der den Unterschied zwischen einer entzerrten Impulsantwort und der Soll-Impulsantwort darstellt, und einen zweiten Anteil auf, der die Energie darstellt, die in nicht verwendeten Frequenzbändern übertragen wird. Der zu dem minimalen Eigenwert der kanalabhängigen Matrix gehörende Eigenvektor stellt den Satz an Entzerrerparametern dar.

Nachteilig ist bei solchen Zeitbereichsentzerrern jedoch die hohe Anzahl an Koeffizienten, die das als Zeitbereichsentzerrer eingesetzte digitale Transversalfilter aufweist, und die aufwendige Adaption des digitalen Transversalfilters. Bei einer Filterlänge von 20 bis 40 Koeffizienten sind pro Sekunde ungefähr 50 bis 100 Millionen Multiplikationen durchzuführen. Dementsprechend benötigt ein digitales Filter zur Zeitbereichsentzerrung eine sehr hohe Rechenleistung. Zusätzlich muß zur Adaption des digitalen Transversalfilters jeder Koeffizient eingestellt werden. Dies erfordert eine lange Adaptionszeit, die zu Beginn einer ADSL-Übertragung vorgesehen werden muß.

Das der Erfindung zugrundeliegende technische Problem liegt daher darin, ein Verfahren zur Kompensation von Störungen bei einem mit Diskreter Multiton-Modulation erzeugten Signal und eine Schaltungsanordnung zur Durchführung des Verfahrens anzugeben, wobei das Verfahren einfach auszuführen ist und die Schaltungsanordnung einfach herstellbar ist und keine aufwendige Adaption von Koeffizienten erforderlich ist.

Dieses Problem wird durch ein Verfahren zur Kompensation von Störungen bei einem mit Diskreter Multiton-Modulation erzeugten Signal mit den Merkmalen von Patentanspruch 1 und durch eine Schaltungsanordnung zur Durchführung des Verfahrens mit den Merkmalen des Patentanspruches 4 gelöst. Vorteilhafte Ausgestaltungen ergeben sich aus den jeweiligen Unteransprüchen.

Die Erfindung betrifft ein Verfahren zur Kompensation von Störungen bei einem mit Diskreter Multiton-Modulation erzeugten Signal. Die Störungen werden im wesentlichen durch den Einschwingvorgang eines Übertragungskanals, über den das Signal übertragen wird, verursacht. Das Signal weist eine Vielzahl von Symbolen auf und jedem Symbol ist ein zyklisches Prefix vorangestellt. Aus den digitalisierten Abtastwerten des Signals wird eine Vielzahl von Parametern berechnet. Aus der Vielzahl von Parametern wird wiederum näherungsweise der Einschwingvorgang des Übertragungskanals berechnet. Zur Kompensation der Störungen wird der näherungsweise berechnete Einschwingvorgang von den digitalisierten Abtastwerten subtrahiert. Vorteilhafterweise wird die Vielzahl von Parametern direkt aus dem Signal berechnet und es ist keine zeitaufwendige Adaption von Koeffizienten wie bei Zeitbereichsentzerrern notwendig. Somit können auch keine Konvergenzprobleme, die durch eine zu lange Adaption verursacht werden, auftreten. Der näherungsweise berechnete Einschwingvorgang ergibt sich dabei aus der Überlegung, daß sich der Übertragungskanal wie ein lineares System niedriger Ordnung verhält und der Einschwingvorgang eines solchen Systems sehr einfach berechnet werden kann. Vorteilhafterweise kann der näherungsweise berechnete Einschwingvorgang im Zeitbereich oder im Frequenzbereich von den digitalisierten Abtastwerten subtrahiert werden. Bei einer Subtraktion im Frequenzbereich ist keine Fouriertransformation des näherungsweise berechneten Einschwingvorganges nötig, da die Koeffizientien, die mit den Einschwingvorgang definierenden Exponentialfunktionen multipliziert werden, gleich bleiben. In einer bevorzugten Ausführungsform wird jeder Parameter durch Subtrahieren eines Paares von digitalisierten Abtastwerten berechnet. Besonders bevorzugt weist dabei jedes Paar von digitalisierten Abtastwerten einen digitalisierten Abtastwert eines Symbols und einen digitalisierten Abtastwert eines zyklischen Prefix auf.

Die Erfindung betrifft weiterhin eine Schaltungsanordnung zur Durchführung eines Verfahrens zur Kompensation von Störungen bei einem mit Diskreter Multiton-Modulation erzeugten Signal. Das Signal weist eine Vielzahl von Symbolen auf und jedem Symbol ist ein zyklisches Prefix vorangestellt. Digitalisierten Abtastwerte des Signals werden dabei einem Seriell-Parallel-Wandler zugeführt. Es ist ferner eine Vielzahl von Subtrahiererschaltungen vorgesehen. Jede Subtrahiererschaltung subtrahiert einen digitalisierten Abtastwert des Symbols und einen entsprechenden digitalisierten Abtastwert des dem Symbol vorangestellten zyklischen Prefix voneinander. Als Ergebnis der Subtraktion ergibt sich eine dem digitalisierten Abtastwert des zyklischen Prefix überlagerte Störung. Für jeden Koeffizienten der Gleichung, die zur näherungsweisen Berechnung des Einschwingvorganges des Übertragungskanals aufgestellt wurde, sind Multipliziererschaltungen vorgesehen, die das Ausgangssignal jeder Subtrahierschaltung mit den Koeffizienten multiplizieren. Das Ausgangssignal jeder Multipliziererschaltung wird dann von dem entsprechenden digitalen Abtastwert des Symbols subtrahiert.

Weitere Vorteile, Merkmale und Anwendungsmöglichkeiten der Erfindung ergeben sich aus der nachfolgenden Beschreibung von Ausführungsbeispielen in Verbindung mit der Zeichnung. In der Zeichnung zeigt

Fig.1    ein Blockschaltbild des Verfahrens zur Kompensation von Störungen bei einem mit Diskreter Multiton-Modulation erzeugten Signal; und

Fig.2    ein Ausführungsbeispiel einer Schaltungsanordnung zur Durchführung des Verfahrens zur Kompensation von Störungen bei einem mit Diskreter Multiton-Modulation erzeugten Signal; und

Fig.3    einen Block des mit Diskreter Multiton-Modulation erzeugten Signals.

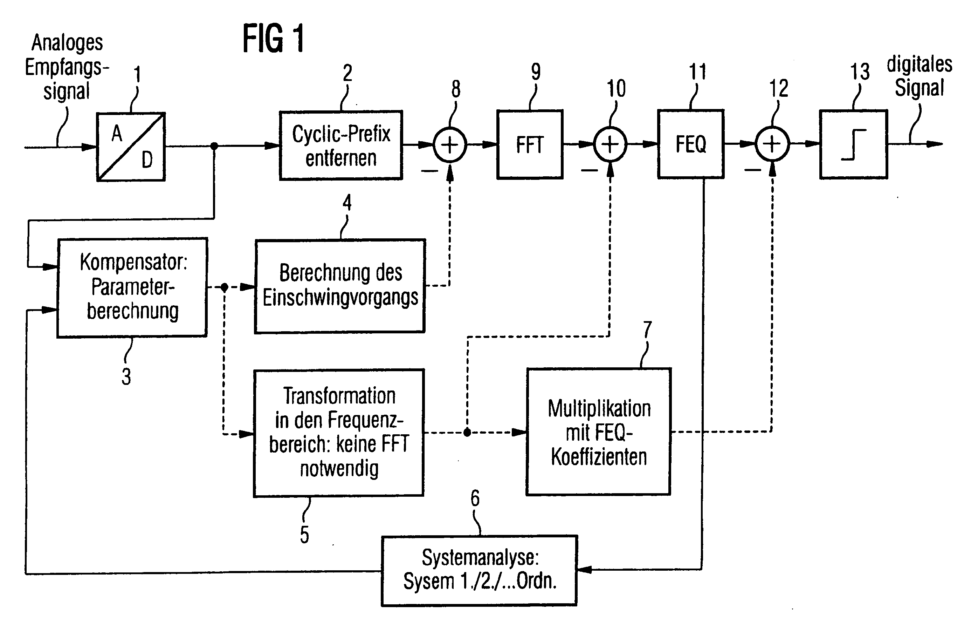

In Figur 1 ist ein Blockschaltbild mit den für die Erfindung wesentlichen Komponenten und drei gestrichelt abgebildeten verschiedenen Ausführungsbeispielen des Verfahrens dargestellt. Das dargestellte Blockschaltbild entspricht dabei einem Empfänger für ein mit Diskreter Multiton-Modulation erzeugtes Signal.

Ein analoges Empfangssignal, das mit der diskreten Multiton-Modulation erzeugt worden ist, wird einem Analog-Digital-Umsetzer 1 zugeführt. Der Analog-Digital-Umsetzer 1 tastet das analoge Empfangssignal ab und setzt die Abtastwerte des analogen Empfangssignals in digitale Werte um.

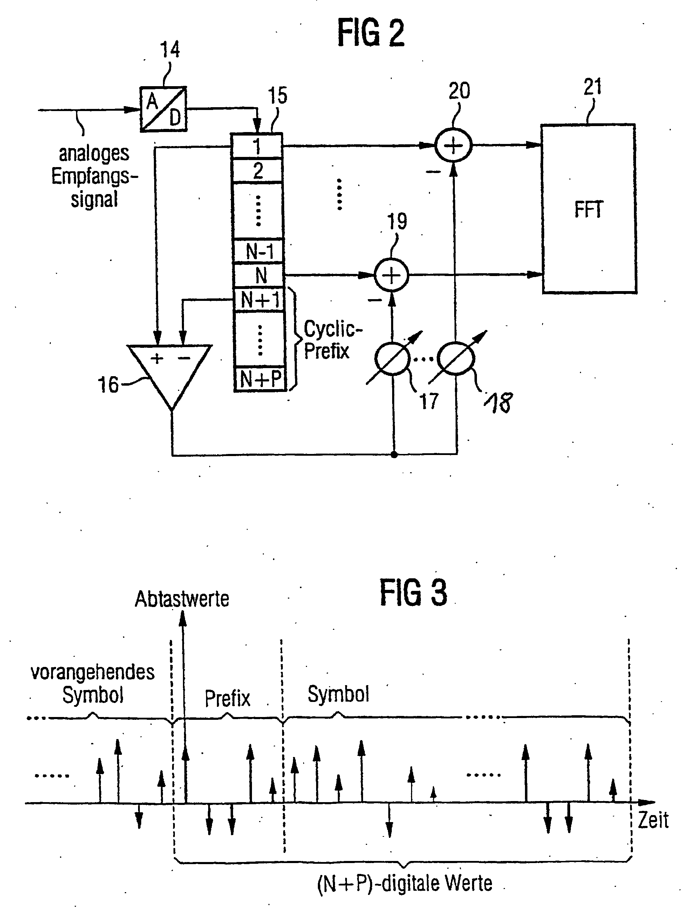

Ein Block des mit Diskreter Multiton-Modulation erzeugten Signals ist in Figur 3 dargestellt. Eine Anzahl N+P von digitalen Werten bildet dabei den Block, der ein übertragenes Symbol, das aus N digitalen Werten besteht, enthält. Die restlichen P digitalen Werte des Blocks entsprechen den letzten P digitalen Werten des Symbols und bilden einen Cyclic-Prefix. Der Cyclic-Prefix steht dabei am Anfang des Blocks. Durch den Cyclic-Prefix wird eine "Pseudo-Periodizität" erzeugt, die dem Empfänger eine leichtere Frequenzbereichsentzerrung des empfangenen Signals ermöglicht. Dabei kann nämlich der Übertragungskanal als lineare Übertragungsfunktion angesehen werden.

Wie in Figur 1 dargestellt, werden die digitalen Werte des Blocks einerseits einer Einheit zum Entfernen des Cyclic-Prefix 2 und andererseits einer Kompensatoreinheit zur Parameterberechnung 3 zugeführt.

Die Kompensatoreinheit zur Parameterberechnung 3 errechnet aus dem Cyclic-Prefix Störungen, die durch den Einschwingvorgang insbesondere des Übertragungskanals entstanden sind. Dazu werden die entsprechenden digitalen Werte des Cyclic-Prefix und des Symbols voneinander subtrahiert. Das Ergebnis der Subtraktion entspricht den Störungen. Dies gilt selbstverständlich nur, wenn die Impulsantwort des Übertragungskanals kürzer als die Zeitdauer eines Symbols einschließlich Cyclic-Prefix ist. In diesem Fall können die digitalen Werte am Ende eines Blocks als eingeschwungen und fehlerfrei betrachtet werden. Dadurch können Störungen aufgrund des Einschwingvorgangs sehr genau berechnet werden. Aus diesen Störungen berechnet die Kompensatoreinheit 3 Parameter für eine lineare Gleichung, die näherungsweise den Einschwingvorgang, der im wesentlichen die Störungen verursacht, angibt.

Die lineare Gleichung zur näherungsweisen Berechnung des Einschwingvorganges beruht auf der Annahme, daß sich der Einschwingvorgang wie der Einschwingvorgang bei einem linearen System niedriger Ordnung verhält. Als ausreichend stellten sich dabei Systeme erster und zweiter Ordnung heraus. Bei einem beispielhaften System zweiter Ordnung weist die Gleichung zur Berechnung des Einschwingvorganges zwei Parameter $c_1$ und $c_2$ auf. Die allgemeine Form der Gleichung zur zur Berechnung des Einschwingvorganges wird durch die folgende Formel dargestellt:

$$e(n \cdot T) = c_1 \cdot f_1(n \cdot T) + c_2 \cdot f_2(n \cdot T) + \ldots$$

Die Funktionen $f_i(n \cdot T)$ sind Exponentialfunktionen, die auch konjugiert komplex sein können. Durch eine Z-Transformation gilt im Frequenzbereich folgende Gleichung zur Berechnung des Einschwingvorganges:

$$E(z) = c_1 \cdot F_1(z) + c_2 \cdot F_2(z) + \ldots$$

Zur Berechnung von zwei Parametern $c_1$ und $c_2$ werden somit zwei digitale Werte der Störungen aufgrund des Einschwingvorganges benötigt.

Die berechneten Parameter können einerseits einer Einheit zur Berechnung des Einschwingvorganges 4 und andererseits einer Einheit zur Transformation in den Frequenzbereich 5 zugeführt werden.

Findet die Kompensation der Störungen im Zeitbereich statt, so wird der Einschwingvorgang, der von der Einheit zur Berechnung des Einschwingvorganges 4 errechnet wurde, mittels eines ersten Subtrahierers 8 von den Ausgangswerten der Einheit zur Entfernung des Cyclic-Prefix 2 subtrahiert. Die so berechneten fehlerfreien digitalen Werte werden dann einer Einheit zur Berechnung der schnellen Fourier-Transformation 9 (FFT) zugeführt, die das durch die digitalen Werte dargestellte Signal vom Zeit- in den Frequenzbereich umsetzt.

Soll stattdessen die Kompensation der Störungen im Frequenzbereich stattfinden, werden die Ausgangswerte der Einheit zur Transformation in den Frequenzbereich 5 mittels eines zweiten Subtrahierers 10 von den Ausgangswerten der Einheit der zur Berechnung der schnellen Fourier-Transformation 9 subtrahiert. Die so berechneten fehlerfreien digitalen Werte werden dann einem Frequenzbereichsentzerrer 11 (FEQ = Frequency Equalization) zugeführt.

Der Frequenzbereichsentzerrer 11 ist als adaptives digitales Filter ausgeführt, dessen Koeffizienten zu Beginn einer Übertragung an den Übertragungskanal angepaßt werden. Ist der Frequenzbereichsentzerrer vollständig angepaßt, so stellt die Übertragungsfunktion die inverse Übertragungsfunktion des Übertragungskanals dar.

Die angepaßten Werte des digitalen Filters des Frequenzbereichsentzerrers werden einer Einheit zur Systemanalyse 6 zugeführt. Die Einheit zur Systemanalyse 6 berechnet aus den zugeführten Koeffizienten die Eigenschaften des Übertragungskanals und stellt daraus die Gleichung zur näherungsweisen Berechnung des Einschwingvorganges des Übertragungskanals zusammen. Diese Gleichung wird der Kompensatoreinheit zur Parameterberechnung 3 zugeführt und von dieser ausgewertet.

Als dritte Alternative kann die Kompensation von Störungen nach der Frequenzbereichsentzerrung durch den Frequenzbereichsentzerrer 11 stattfinden. Dazu werden die Ausgangswerte der Einheit zur Transformation in den Frequenzbereich 5 einer Einheit zur Multiplikation mit den FEQ-Koeffizienten 7 zugeführt. Die Einheit zur Multiplikation mit FEQ-Koeffizienten 7 multipliziert die zugeführten Werte mit den angepaßten Koeffizienten des Frequenzbereichsentzerrers 11. Die Ausgangswerte der Einheit zur Multiplikation mit FEQ-Koeffizienten 7 werden dann mittels eines dritten Subtrahierers 12 von den Ausgangswerten der Einheit zur Frequenzbereichsentzerrung 11 subtrahiert.

Die so errechneten störungsfreien digitalen Werte werden schließlich einer Einheit zur Entscheidung und Dekodierung 13 zugeführt, die ein digitales Signal erzeugt, das die im analogen Empfangssignal enthaltene Information enthält.

In Figur 2. ist ein Ausführungsbeispiel einer Schaltungsanordnung zur Durchführung des Verfahrens dargestellt.

Bei diesem Ausführungsbeispiel findet die Kompensation der Störungen im Zeitbereich vor einer schnellen Fourier-Transformation statt.

Ein analoges Empfangssignal wird einem Analog-Digital-Umsetzer 14 zugeführt, der das zugeführte analoge Empfangssignal in digitale Werte umsetzt.

Die digitalen Werte am Ausgang des Analog-Digital-Umsetzers 14 werden einer Einheit zur Seriell-Parallel-Wandlung 15 zugeführt.

Die Einheit zur Seriell-Parallel-Wandlung 15 weist N+P Speicherplätze für digitale Werte auf. N+P digitale Werte bilden genau einen Block des mit diskreter Multiton-Modulation erzeugten Signals. Ein Block weist dabei am Anfang das Cyclic-Prefix, das aus P digitalen Werten besteht, und darauf folgend das Symbol, das aus N digitalen Werten besteht, auf.

In diesem Ausführungsbeispiel wird der Übertragungskanal als ein System 1.Ordnung betrachtet, wobei zur Berechnung des Einschwingvorganges lediglich ein digitaler Wert der Störungen benötigt wird.

Unter der Annahme, daß Einschwingvorgang des Kanals bereits vor den letzten digitalen Wert eines Blocks (Speicherplätze 1, 2) bereits abgeklungen ist, wird der Fehler aufgrund des Einschwingvorganges durch Subtraktion des letzten digitalen Wertes des.Blocks (Speicherplatz 1) und des letzten digitalen Wertes des Cyclic-Prefix (Speicherplatz N+1) berechnet.

Dazu werden diese digitalen Werte einem Subtrahierer 16 zugeführt. Der,berechnete Fehler am Ausgang des Subtrahierers 16 wird jedem Multiplikator 17, 18 zugeführt. Für jeden der N digitalen Werte des Symbols ist dabei ein Multiplikator vorgesehen. Jeder Multiplikator multipliziert den Fehler am Ausgang des Subtrahierers 16 mit einem Parameter, der mit der Systemgleichung für ein lineares System 1. Ordnung berechnet wurde.

Der berechnete Einschwingvorgang wird jeweils von einem digitalen Wert des Symbols mittels Subtrahierer 19, 20 subtrahiert.

Die so berechneten und korrigierten digitalen Werte des Symbols werden dann einer Einheit zur schnellen Fourier-Transformation 21 zugeführt, die das durch die zugeführten digitalen Werte dargestellte Signal von Zeit- in den Frequenzbereich zur Weiterverarbeitung umsetzt.

## Patentansprüche

1. Verfahren zur Kompensation von Störungen bei einem mit Diskreter Multiton-Modulation erzeugten Signal, wobei die Störungen im wesentlichen durch den Einschwingvorgang eines Übertragungskanals, über den das Signal übertragen wird, verursacht werden, wobei das Signal eine Vielzahl von Symbolen mit digitalisierten Abtastwerten aufweist und jedem Symbol ein zyklischer Prefix mit digitalisierten Abtastwerten vorangestellt ist, mit folgenden Schritten:

Zuführen der digitalisierten Abtastwerte des Signals zu einem Seriell-Parallel-Wandler (15);
Voneinander Subtrahieren mindestens eines digitalisierten Abtastwertes eines Symbols und eines diesem zugeordneten, digitalisierten Abtastwertes des dem Symbol vorangestellten zyklischen Prefixes mittels mindestens einer Subtrahiererschaltung (16) zur Störungsermittlung;
Berechnen des Einschwingvorgangs des Übertragungskanals aus der ermittelten Störung und einem bestimmten Parameter mittels Multipliziererschaltungen (17, 18); und
Subtrahieren des berechneten Einschwingvorgangs von den digitalisierten Abtastwerten des Symbols.

2. Verfahren nach Anspruch 1, **dadurch gekennzeichnet, dass** die Kompensation der Störungen im Zeit- oder im Frequenzbereich durchgeführt wird.

3. Verfahren nach einem der Ansprüche 1 oder 2, **da-**

**durch gekennzeichnet, dass** einer Systemanalyseeinheit (6) Koeffizienten zugeführt werden, die aus fehlerkorrigierten digitalisierten Abtastwerten berechnet werden, wobei sich die fehlerkorrigierten digitalisierten Abtastwerte aus dem Subtrahieren des berechneten Einschwingvorgangs von den digitalisierten Abtastwerten des Symbols ergeben, woraus die Eigenschaften des Übertragungskanals berechnet werden.

4. Schaltungsanordnung zur Durchführung des Verfahrens nach einem der Ansprüche 1 bis 3, mit:

einem.Seriell-Parallel-Wandler (15), dem die digitalisierten Abtastwerte des Signals zuführbar sind;
mindestens einer Subtrahiererschaltung (16), wobei jede Subtrahiererschaltung (16) einen digitalisierten Abtastwert des Symbols und einen diesem zugeordneten digitalisierten Abtastwert des dem Symbol vorangestellten zyklischen Prefixes für eine Berechnung des Fehlers aufgrund des Einschwingvorgangs voneinander subtrahiert;
mindestens einer Multipliziererschaltung (17, 18) für eine Multiplikation des Fehlers mit einem bestimmten Parameter, wobei jeweils einem digitalisierten Abtastwert eines Symbols mindestens eine Multipliziererschaltung (17, 18) zugeordnet ist;

wobei das Ausgangssignal jeder Subtrahiererschaltung (16) jeweils jeder Multipliziererschaltung (17, 18) zuführbar ist; und
wobei das Ausgangssignal jeder Multipliziererschaltung (17, 18) von dem entsprechenden digitalisierten Abtastwert des Symbols mittels Subtrahierereinrichtungen (19, 20) subtrahierbar ist.

## Claims

1. A method for the compensation of interference in a signal generated by discrete multitone modulation, wherein the interference is essentially caused by the transient process of a transmission signal via which the signal is transmitted, wherein the signal has a multiplicity of symbols with digitized samples and each symbol is preceded by a cyclic prefix with digitized samples, comprising the following steps:

feeding the digitized samples of the signal to a serial-parallel converter (15);
subtracting at least one digitized sample of a symbol from a digitized sample - assigned thereto - of the cyclic prefix preceding the symbol by means of at least one subtractor circuit (16) for determining interference;

calculating the transient process of the transmission channel from the determined interference and a specific parameter by means of multiplier circuits (17, 18); and

subtracting the calculated transient process from the digitized samples of the symbol.

2. The method as claimed in claim 1, wherein the compensation of the interference is carried out in the time domain or in the frequency domain.

3. The method as claimed in either of claims 1 and 2, wherein coefficients which are calculated from error-corrected digitized samples are fed to a system analysis unit (6), the error-corrected digitized samples resulting from the subtraction of the calculated transient process from the digitized samples of the symbol, from which the properties of the transmission channel are calculated.

4. A circuit arrangement for carrying out the method as claimed in one of claims 1 to 3, comprising:

a serial-parallel converter (15), to which the digitized samples of the signal can be fed;
at least one subtractor circuit (16), wherein each subtractor circuit (16) subtracts a digitized sample of the symbol from a digitized sample - assigned thereto - of the cyclic prefix preceding the symbol for a calculation of the error on account of the transient process;
at least one multiplier circuit (17, 18) for a multiplication of the error by a specific parameter, wherein at least one multiplier circuit (17, 18) is assigned to each digitized sample of a symbol;

wherein the output signal of each subtractor circuit (16) can be fed in each case to each multiplier circuit (17, 18); and
wherein the output signal of each multiplier circuit (17, 18) can be subtracted from the corresponding digitized sample of the symbol by means of subtractor devices (19, 20).

**Revendications**

1. Procédé pour la compensation de perturbations dans un signal généré avec modulation discrète multiton, les perturbations venant pour l'essentiel du phénomène transitoire d'un canal de transmission, via lequel le signal est transmis, le signal comprenant une pluralité de symboles avec des valeurs d'échantillonnage numérisées et chaque symbole étant précédé d'un préfixe cyclique avec des valeurs d'échantillonnage numérisées, comprenant les étapes suivantes consistant à :

envoyer les valeurs d'échantillonnage numérisées du signal à un convertisseur série parallèle (15) ;
soustraire l'une de l'autre au moins une valeur d'échantillonnage numérisée d'un symbole et d'une valeur d'échantillonnage numérisée, associée à ce dernier, issue du préfixe cyclique précédant le symbole, à l'aide d'au moins un circuit soustracteur (16) pour la détection de perturbations ;
calculer le phénomène transitoire du canal de transmission à partir de la perturbation détectée et d'un paramètre déterminé, à l'aide de circuits multiplicateurs (17, 18) ; et
soustraire le phénomène transitoire calculé des valeurs d'échantillonnage numérisées du symbole.

2. Procédé selon la revendication 1, **caractérisé en ce que** la compensation des perturbations est réalisée en régime temporel ou en régime fréquentiel.

3. Procédé selon une des revendications 1 ou 2, **caractérisé en ce que** des coefficients, qui sont calculés à partir de valeurs d'échantillonnage numérisées corrigées des erreurs, sont envoyés à une unité d'analyse de système (6), les valeurs d'échantillonnage numérisées corrigées des erreurs découlant de la soustraction du phénomène transitoire calculé des valeurs d'échantillonnage numérisées du symbole, ce en quoi les caractéristiques du canal de transmission sont calculées.

4. Circuit pour la réalisation du procédé selon une des revendications 1 à 3, comprenant :

un convertisseur série parallèle (15) auquel peuvent être envoyées les valeurs d'échantillonnage du signal ;
au moins un circuit soustracteur (16), chaque circuit soustracteur (16) soustrayant l'une de l'autre une valeur d'échantillonnage numérisée du symbole et une valeur d'échantillonnage numérisée, associée à ce dernier, issue du préfixe cyclique précédant le symbole pour un calcul d'erreur en raison du phénomène transitoire ;
au moins un circuit multiplicateur (17, 18) pour une multiplication de l'erreur avec un paramètre déterminé, au moins un circuit multiplicateur (17, 18) étant à chaque fois affecté à une valeur d'échantillonnage numérisée d'un symbole ;
le signal de sortie de chaque circuit soustracteur (16) pouvant être, à chaque fois, envoyé à chaque circuit multiplicateur (17, 18) ; et
le signal de sortie de chaque circuit multiplicateur (17,18) pouvant être soustrait de la valeur d'échantillonnage numérisée du symbole correspondante, à l'aide de dispositifs de soustrac-

tions (19, 20).

# FIG 1

Analoges Empfangssignal → [1: A/D] → [2: Cyclic-Prefix entfernen] → (8: +/−) → [9: FFT] → (10: +/−) → [11: FEQ] → (12: +/−) → [13] → digitales Signal

[3: Kompensator: Parameterberechnung]

[4: Berechnung des Einschwingvorgangs]

[5: Transformation in den Frequenzbereich: keine FFT notwendig]

[7: Multiplikation mit FEQ-Koeffizienten]

[6: Systemanalyse: Sysem 1./2./...Ordn.]

EP 1 157 511 B1

# FIG 2

# FIG 3

Abtastwerte

vorangehendes
Symbol

Prefix    Symbol

Zeit

(N+P)-digitale Werte

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5521908 A

- EP 0768778 A1

**In der Beschreibung aufgeführte Nicht-Patentliteratur**

- **AL-DHAHIR, N. ; CIOFFI, J.M.** Optimum Finite-Length Equalization for Multicarrier Transceivers. *IEEE Trans.on Comm.,* Januar 1996, vol. 44 (1